# EUROPEAN PATENT SPECIFICATION

(11) **EP 3 011 075 B1**
(45) Date of publication and mention of the grant of the patent: **29.08.2018**
(21) Application number: 14736317.0
(22) Date of filing: 16.06.2014
(51) Int. Cl.: C23G 1/36, B01J 8/18, B01J 6/00, F23D 14/20, F23C 5/02, F23C 10/20, F27B 15/14

(54) **HEATING MODULE FOR USE IN A PYROHYDROLYSIS REACTOR**
HEIZMODUL ZUR VERWENDUNG IN EINEM PYROHYDROLYSEREAKTOR
MODULE DE CHAUFFAGE DESTINÉ À ÊTRE UTILISÉ DANS UN RÉACTEUR DE PYROHYDROLYSE

(30) Priority: 18.06.2013 EP 13172413
(43) Date of publication of application: 27.04.2016
(73) Proprietor: CMI UVK GmbH, 56410 Montabaur (DE)
(72) Inventor: QUIRMBACH, Arno, 56424 Moschheim (DE); MARX, Thomas, 56427 Siershahn (DE); SEHNER, Egon, 56235 Ransbach-Baumbach (DE)
(74) Representative: Schwöbel, Thilo K.
(86) International application number: PCT/EP2014/062577
(87) International publication number: WO 2014/202534

(56) References cited:
- WO-A1-2008/065555
- WO-A1-2009/012511
- WO-A2-02/38819
- GB-A- 2 014 712
- US-A- 3 799 747

## Description

### BACKGROUND

The present invention relates to a heating module for use in a pyrohydrolysis reactor, in particular for regeneration of acids from spent pickle or leaching liquor. The present invention further relates to a method for maintaining such a heating module.

Typically, the regeneration of Hydrochloric acids from metal salt solutions of said acids or spent acids includes a pyrohydrolysis process, for example fluidised bed technology.

In the fluidized bed process, a liquid is directed through an inlet into a reaction chamber of a fluidised bed reactor, wherein a fluidised bed of particulate substance is formed in the reaction chamber. Solid particles of the bed are kept in suspension by means of an upward blowing jet of fluidizing medium, e.g. a pressurized hot gas, which enters the reaction chamber through a base plate located at the reactor bottom. Furthermore, heating elements are provided to heat the gas and/or fluidised bed. The heating elements typically consist of a set of Fuel-Nozzles and Mixing Nozzles. The reactors according to the state of the art are inconvenient with regard to maintenance and operation, especially due to their insufficient modularity. The maintenance of the reactor, the base plate and/or its components, e.g. heating elements, ducts or nozzles - typically require long shutdown times and/or huge technological efforts for disassembling and reassembling. For example, many components, which are difficult to access, need to be replaced or disassembled during maintenance such that the maintenance and/or acquisition costs are rather high. A fluidised bed reactor for the pyrohydrolysis of spent acids is disclosed in WO-A-2009/012511.

### SUMMARY

It is therefore an objective of the present invention to provide an improved method for installation and/or maintenance of a heating module for use in a pyrohydrolysis reactor, an improved method for the fabrication of the heating module and/or an improved heating module, wherein the acquisition and maintenance costs are reduced, the maintenance efforts drastically reduced and/or wherein a maximum size of operator convenience is achieved.

The objective of the present invention is achieved by a heating module for use in a pyrohydrolysis reactor, the heating module comprising:
-- a fuel distribution system being in fluid communication with a fuel source,
-- a carrier element having a plurality of built-in coupling units, wherein a coupling unit of the plurality of coupling units comprises a coupling element, wherein the coupling element of said coupling unit is in fluid communication with the fuel distribution system,
-- a plurality of burner units arranged on the carrier element, wherein a burner unit of the plurality of burner units comprises a connector element and a burner element, wherein the connector element is in fluid communication with the burner element, wherein the connector element is reversibly connected to the coupling element of said coupling unit and wherein the connector element is in fluid communication with the coupling element of said coupling unit.

According to the present invention, it is thereby advantageously possible to provide an improved heating module for use in a pyrohydrolysis reactor, wherein the maintenance of the heating module is simplified due to its modularity. In particular, all burner units of the plurality of burner units are constructed in the same way, wherein each burner unit is separately and/or individually supplied with gas and/or reversibly removable, e.g. attachable and detachable, from the carrier element. Moreover, when said burner unit is attached or fastened to the carrier element, the burner element is in fluid communication with the fuel distribution system via the connector element and the coupling element. Preferably, the coupling element and/or connector element comprises a pipe fitting to connect the burner unit to the fuel distribution system. The burner element is preferably hermetically connected to the fuel distribution system by means of the coupling element and the connecting element. Preferably, each burner unit is separately maintainable - i.e. replaceable by another burner unit - while the carrier element is fixed to the reaction chamber. Moreover, it is advantageously possible to avoid a complex network of ducts and/or pipes for the distribution of fuel medium to the burner units. Advantageously, the heating module is provided with a simplified construction. Preferably, due to the inventive plug-connection between the burner unit and the carrier element, it is advantageously possible to easily fabricate, install and maintain the heating module and at the same time fasten the burner unit to the carrier element such that no leakage arises due to vibrations and/or movements of the carrier element or reaction chamber. Thereby the site security is considerably improved. Furthermore, the modularity of the heating module - both with regard to the removable connection of the burner units to the carrier elements and with regard to the removable connection of the carrier element to the reactor - advantageously allows to maintain and/or assemble the heating module optionally on-site or off-site or partially on-site and partially off-site. Here, on-site means that at least the carrier element is connected to the reactor and off-site means that at least the carrier element is removed from the reactor, for example during maintenance or assembly in a workshop.

The heating module comprises a carrier element, the carrier element being preferably a base plate of a fluidised bed reactor. The heating module according to the present invention comprises a plurality of burner units, wherein plurality means preferably any number between 3 and 800 burner units, more preferred between 10 and 600 burner units, even more preferred between 15 and 500 burner units. In particular, each burner unit is arranged on the base plate on the bottom of the fluidised bed reactor. Preferably, each burner unit of the plurality of burner units is separately and/or individually supplied with a fuel medium, preferably a gas or burner gas, from the fuel distribution system. Preferably, each burner unit of the plurality of burner units is separately and/or individually supplied with an oxidant medium, preferably air or a gas-mixture comprising oxygen, from an oxidant distribution system. The oxidant distribution system is preferably an oxidant distribution chamber of the carrier element. Preferably, the burner unit comprises a burner element and an oxidant element, wherein preferably both, the burner element and the oxidant element are independently from each other attachable and/or detachable to and from the carrier element. It is thereby advantageously possible to detach the oxidant element of the burner unit from the carrier element without at the same time detaching the burner element of the burner unit and/or the fuel distribution system from the carrier element.

According to a preferred embodiment of the present invention, the burner unit of the plurality of burner units further comprises an oxidant element for the supply of an oxidant medium to the burner unit, wherein the oxidant element is reversibly connected to the carrier element, wherein the burner element and the oxidant element are preferably independently of each other attachable to the carrier element and/or independently of each other detachable from the carrier element.

According to the present invention, it is thereby advantageously possible to replace burner elements and/or oxidant elements of the plurality of burner units of the heating module without replacing the heating module as a whole. In particular, the oxidant element comprises an opening in a cap region, the opening being provided for the release of a combustible mixture into a reaction chamber of a reactor. Typically, the oxidant element is more susceptible to faults due to the opening in the cap region such that the oxidant element has to be replaced more often than other parts of the heating module. According to the present invention it is therefore advantageously possible to reduce the maintenance efforts because the oxidant element may be maintained independently from other parts of the heating module. Preferably, the fuel distribution system is fastened to (e.g. directly connected) the carrier element such that it is advantageously possible to replace defective burner units - in particular burner elements and/or oxidant elements - without detachment of the fuel distribution system (as a whole or in parts).

According to a preferred embodiment of the present invention, said coupling unit comprises a recess extending completely through the carrier element in an upward-direction pointing from a bottom part of the carrier element to a top part of the carrier element, wherein the top part and the bottom part each extend substantially parallel to a plane of main extension of the carrier element, wherein the burner element of said burner unit is insertable into the recess, wherein the burner element of said burner unit is preferably a burner tube, wherein the recess of said coupling unit is preferably configured to positively lock the burner tube with regard to a movement of the burner tube parallel to the plane of main extension of the carrier element.

According to the present invention, it is thereby advantageously possible to provide a heating module, wherein each burner element can be separately inserted into the recess of the carrier element and easily fastened to the carrier element. It is furthermore advantageously possible to provide a heating module which has a plurality of burner units that are individually and separately replaceable, wherein the transient region between the fuel distribution system and the burner unit is hermetically sealed such that a maximum of construction site security is achieved.

According to a preferred embodiment of the present invention, the burner element of said burner unit has a tail end and a head end, wherein the connector element of said burner unit is fastened to the tail end of the burner element, wherein the burner element is insertable, head first, in the upward-direction, from the bottom part to the top part, into the recess of said coupling unit, wherein the coupling element of said coupling unit and the connector element of said burner unit are configured to fasten the burner element to the bottom part of the carrier element by means of a positive-locking connection between the coupling element and the connector element.

According to the present invention, it is thereby advantageously possible to provide a heating module, wherein only the burner element is replaceable and wherein all other components of the heating module are kept fixed to the heating module. In particular, a single burner element - for example a defective burner element - can be replaced by an intact burner element, while the carrier element is kept fixed to the reaction chamber, while one or more or all burner units of the plurality of burner units are kept fixed to the carrier element and/or while an intact oxidant tube associated with the defective burner element is kept fixed to the top part of the carrier element. Conversely, if the oxidant tube is defective, only the defective oxidant tube may be replaced by an intact oxidant tube, while the intact burner element is kept fixed to the bottom part of the carrier element. It is thereby advantageously possible to replace only the defective elements, while most or all intact elements of the heating module are kept in their designated position.

According to a preferred embodiment of the present invention, the fuel distribution system is fastened to the carrier element, preferably on the bottom part of the carrier element, by means of a force-locked and/or adhesive connection or in that the fuel distribution system forms an integral part of the carrier element.

According to the present invention, it is thereby advantageously possible to provide a fuel distribution system which is fastened to the carrier element such that no leakage arises due to vibrations and/or movements of the carrier element or reaction chamber. Thereby the site security is considerably improved.

According to a preferred embodiment of the present invention, the fuel distribution system is a ductwork, wherein a duct of the ductwork is fastened to the coupling element of said coupling unit, wherein the ductwork is preferably a piping and the duct a pipe, wherein the pipe is preferably screw fitted with and/or welded to and/or hermetically connected to the coupling element of said coupling unit.

According to the present invention, it is thereby advantageously possible to assemble the heating module off-site - for example in a workshop - and connect the heating module to the reactor. Due to the provisioning of the fuel distribution system as a piping, the site security - in particular with regard to leakages - is considerably improved and defective pipes can be easily replaced on-site as well as off-site. Preferably, the fuel distribution system mainly extends substantially parallel to the plane of main extension of the carrier element, wherein preferably an extension of the fuel distribution system perpendicular to the plane of main extension corresponds substantially to the extension of a cross-section of a duct or pipe of the fuel distribution system. In particular, the extension of the fuel distribution system perpendicular to the plane of main extension is less than three times the cross-section, preferably less than two times the cross-section, even more preferred equal to the cross-section, of the largest or smallest duct or pipe of the fuel distribution system.

According to a preferred embodiment of the present invention, the burner element of said burner unit is fastened to the bottom part of the carrier element by means of a force-locked connection and/or form-locked connection between the coupling element of said coupling unit and the connector element of said burner unit.

According to the present invention, it is thereby advantageously possible to easily construct and maintain the heating module and at the same time fasten the burner unit to the carrier element such that no leakage arises due to vibrations and/or movements of the carrier element or reaction chamber. Thereby the site security is considerably improved. Furthermore, the modularity of the heating module with regard to the removable connection of the burner units to the carrier elements advantageously allows maintaining and/or assembling the heating module optionally on-site or off-site. Preferably, due to the inventive plug-connection between the burner unit and the carrier element, it is advantageously possible to allow a fast and reliable maintenance of the heating module.

According to a preferred embodiment of the present invention, the carrier element is reversibly connectable to the pyrohydrolysis reactor, wherein the carrier element is in particular a plate, preferably a base plate, of a fluidised bed reactor, wherein the top part of the carrier element forms at least partially an inner wall, preferably a bottom wall, of a reaction chamber of the reactor.

According to the present invention, it is thereby advantageously possible to provide a modular burner array on the carrier element or base plate of the pyrohydrolysis reactor, wherein the mounting height can be advantageously reduced. Preferably the height of the reactor chamber of the fluidised bed reactor can be reduced, because the extension of the fuel distribution system parallel to the upward and/or downward direction is considerably reduced. In particular, the extension of supply ducts or pipes of the fuel distribution system are reduced. In this way, the acquisition costs for the reactor can be considerably reduced while the maintenance is simplified.

According to a preferred embodiment of the present invention, the carrier element comprises an oxidant distribution chamber being arranged between the top part and the bottom part of the carrier element, wherein the oxidant distribution chamber is in fluid communication with an oxidant source and the plurality of burner units.

According to the present invention, it is thereby advantageously possible to further reduce the extension of the heating module in the direction perpendicular to the plane of main extension, because no further ductwork is employed for the distribution of oxidants. It is in particular advantageously possible to supply each burner unit with an oxidant medium separate from the fuel distribution system such that the oxidant element of the burner unit can be attached or detached from the carrier element separate from the burner element and/or fuel distribution system. Thereby the maintenance effort is advantageously reduced.

According to a preferred embodiment of the present invention, said burner unit comprises a further connector element and an oxidant element, wherein the connector element is reversibly connected to said coupling unit on the top part of the carrier element, wherein the oxidant element is in fluid communication with the oxidant distribution system of the carrier element, wherein a two component nozzle is formed by the oxidant element and the burner element in a head region of said burner unit, wherein the two component nozzle is configured to mix a fuel medium supplied through an opening in the head end of the burner tube with an oxidant medium supplied by the oxidant distribution system to the oxidant element, wherein the oxidant tube comprises a further opening for releasing a combustible mixture of oxidant medium and fuel medium.

According to the present invention, it is thereby advantageously possible to attach and/or detach, both, the burner element and the oxidant element to and from the carrier element independently from each other. It is thereby advantageously possible to detach the oxidant element of the burner unit from the carrier element without at the same time detaching the burner element of the burner unit and/or the fuel distribution system from the carrier element. By providing a two component nozzle in the top region of the burner unit, it is advantageously possible to increase the site safety during operation.

According to a preferred embodiment of the present invention, the oxidant element is an oxidant tube concentrically arranged around the burner tube, wherein the burner tube terminates inside the oxidant tube, wherein a guiding means is arranged on an inner wall of the oxidant tube, wherein the burner tube is positively locked by the guiding means.

According to the present invention, it is thereby advantageously possible to fasten the burner unit to the carrier element by providing a plug-connection between the burner element and the oxidant element such that the site safety is further increased. Due to the inventive plug-connections, both, between the burner unit and the carrier element and between the burner element and the oxidant element, it is advantageously possible to easily construct and maintain the heating module and at the same time fasten the burner unit to the carrier element such that no leakage arises due to vibrations and/or movements of the carrier element or reaction chamber.

The object of the present invention is further achieved by a pyrohydrolysis reactor, in particular fluidised bed reactor, configured to carry out a pyrohydrolysis process, wherein the reactor comprises a reaction chamber with a heating module according to the present invention.

According to the present invention, it is thereby advantageously possible to provide an improved pyrohydrolysis reactor, wherein acquisition and maintenance costs are reduced, the maintenance efforts drastically reduced and/or wherein a maximum size of operator convenience is achieved. Furthermore, the site safety is considerably improved.

The object of the present invention is further achieved by a method for maintaining a heating module, preferably a heating module according to the present invention, wherein the plurality of burner units comprise a fraction of defective burner units, wherein a defective burner unit of the fraction of defective burner units comprises a defective burner element, wherein, in a first maintenance step, a connector element fastened to a tail end of the defective burner element is disconnected from a coupling element of a coupling unit associated with said defective burner unit, wherein, in a second maintenance step, the defective burner element is removed from a recess of the coupling unit of the carrier element by pulling out the defective burner element, tail end first, in the downward-direction, wherein, in a third maintenance step, an intact burner element is provided to replace the defective burner element, wherein, in a fourth maintenance step, the intact burner element is inserted into the recess of the coupling unit, head end first, into the upward-direction, wherein, in a fifth maintenance step, a connector element fastened to the intact burner element is reversibly connected to the coupling element.

According to the present invention, it is thereby advantageously possible to provide an improved maintenance method for the maintenance of a pyrohydrolysis reactor, wherein single defective components of the heating modules can be separately replaced by corresponding intact components while the carrier element is kept fixed to the reaction chamber, while one or more or all burner units of the plurality of burner units are kept fixed to the carrier element and/or while an intact oxidant tube associated with the defective burner element is kept fixed to the top part of the carrier element. Additionally, the shutdown time is reduced, because the heating module can be maintained faster and more cost-efficiently as compared to the state of the art. Furthermore, the site security is considerably improved at the same time, because the oxidant elements can be attached and/or detached - in a manner analogue to the burner elements - independently from the burner elements and/or fuel distribution system.

According to a preferred embodiment of the present invention, a further defective burner unit of the fraction of defective burner units comprises a defective oxidant element, wherein the defective oxidant element is detached from the carrier element, wherein an intact oxidant element is reversibly connected to the carrier element.

According to the present invention, it is thereby advantageously possible to maintain the heating module in such a manner that the defective oxidant element and the defective burner element are replaced - independently of each other - by intact elements. In particular, the further defective burner unit and the defective burner unit are the same or distinct defective burner units.

The object of the present invention is further achieved by a method for fabricating a heating module for use in a pyrohydrolysis reactor, in particular a fluidised bed reactor, wherein, in a first step, a fuel distribution system is provided and brought in fluid communication with a fuel source, wherein, in a second step, a carrier element having a plurality of built-in coupling units is provided, wherein each coupling unit of the plurality of coupling units is provided with a coupling element, wherein the coupling element is coupled in fluid communication with the fuel distribution system, wherein, in a third step, a plurality of burner units are arranged on the carrier element, wherein a burner unit of the plurality of burner units is provided with a connector element and a burner element, wherein the connector element is brought in fluid communication with the burner element, wherein the connector element is reversibly connected to the coupling element of said coupling unit and wherein the connector element is brought in fluid communication with the coupling element of said coupling unit.

According to the present invention, it is thereby advantageously possible to improve the production of the heating module, because the modularity of the heating module - both with regard to the removable connection of the burner units to the carrier elements and with regard to the removable connection of the carrier element to the reactor - advantageously allows to maintain and/or assemble the heating module optionally on-site or off-site or partially on-site and partially off-site. Here, on-site means that at least the carrier element is connected to the reactor and off-site means that at least the carrier element is removed from the reactor, for example during maintenance or assembly in a workshop.

According to a preferred embodiment of the present invention, in the first step, the fuel distribution system is constructed as a ductwork, preferably a piping, wherein, in the second step, the ductwork is fastened to the carrier element.

According to the present invention, it is thereby advantageously possible to assemble the heating module off-site - for example in a workshop - and connect the heating module to the reactor. Due to the provisioning of the fuel distribution system as a piping, the site security - in particular with regard to leakages - is considerably improved and defective pipes can be easily replaced on-site as well as off-site. Preferably, the fuel distribution system mainly extends substantially parallel to the plane of main extension of the carrier element, wherein preferably an extension of the fuel distribution system perpendicular to the plane of main extension corresponds substantially to the extension of a cross-section of a duct or pipe of the fuel distribution system. In particular, the extension of the fuel distribution system perpendicular to the plane of main extension is less than three times the cross-section, preferably less than two times the cross-section, even more preferred equal to the cross-section, of the largest or smallest duct or pipe of the fuel distribution system.

According to a preferred embodiment of the present invention, in a fourth step, temporally after the first step, after the second step and/or after the third step, the carrier element is reversibly fastened to a reaction chamber of the pyrohydrolysis reactor.

According to the present invention, it is thereby advantageously possible to assemble the heating module off-site - for example in a workshop - and connect the heating module to the reactor later. Thereby, it is advantageously possible to produce a heating module for use in a pyrohydrolysis reactor, preferably a fluidised bed reactor, wherein the maintenance costs, production costs and/or acquisition costs are considerably reduced with regard to the state of the art. Furthermore, by fabricating a modular heating device for use in the fluidised bed reactor, it is advantageously possible to replace only the defective elements without the need to exchange an intact component of the heating module.

### BRIEF DESCRIPTION OF THE DRAWINGS

**Figure 1** illustrated schematically an embodiment of the heating module according to the present invention in a cross-sectional view.
**Figure 2** illustrates schematically an embodiment of the heating module according to the present invention in an enlarged view.
**Figure 3** illustrates schematically an embodiment of a coupling element according to the present invention in a cross-sectional view.
**Figure 4** illustrates schematically an embodiment of a coupling element according to the present invention in a plan view.
**Figure 5** illustrates schematically an embodiment of a connector element according to the present invention in a cross-sectional view.
**Figure 6** illustrates schematically an embodiment of a connector element according to the present invention in a plan view.
**Figure 7** illustrates schematically an embodiment of a heating module according to the present invention in a plan view.
**Figure 8** illustrates schematically an embodiment of a heating module according to the present invention in a cross-sectional view.

### DETAILED DESCRIPTION

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described of illustrated herein.

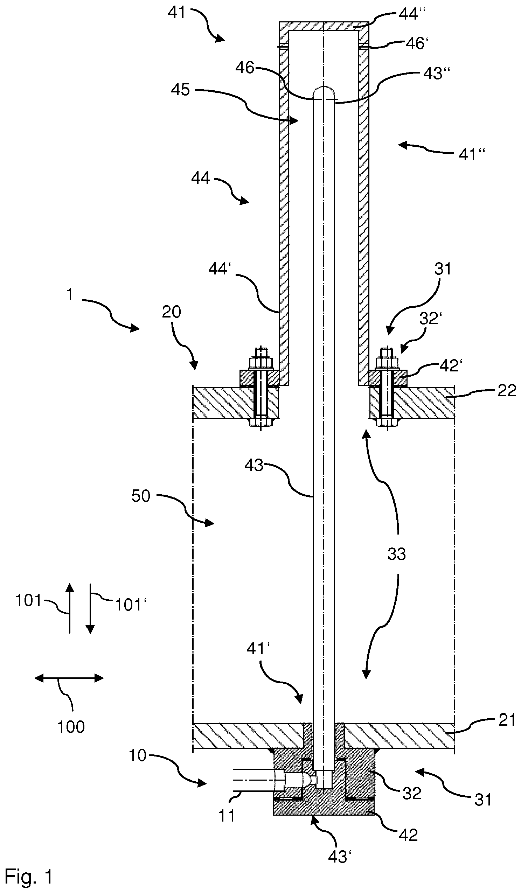

In **Figure 1** an embodiment of the heating module 1 for use in a pyrohydrolysis reactor 2 according to the present invention is illustrated schematically in a cross-sectional view. The heating module 1 comprises a fuel distribution system 10 being in fluid communication with a fuel source 2' (not shown), a carrier element 20 having a plurality of built-in coupling units 30, and a plurality of burner units 40. Although Figure 1 only shows one segment of the heating module 1, the heating module 1 preferably comprises a plurality of such segments.

Preferably the heating module 1 is reversibly connectable to a reaction chamber 3 of a pyrohydrolysis reactor. Preferably, the heating module 1 is reversibly attachable to a bottom of a fluidised bed reactor 2, wherein in particular the carrier element 20 forms the base-plate 20 of the fluidised bed reactor. Alternatively, the heating module 1 may also be attached to other positions of a pyrohydrolysis reactor and or other reactors.

Preferably, the carrier element 20 mainly extends substantially parallel to a plane of main extension 100. Preferably, the carrier element 20 comprises a bottom part 21, in particular a top plate 21, and a top part 22, in particular a top plate 22. Preferably, a chamber 50, here an oxidant distribution chamber 50 is formed and/or limited by the bottom part 21 and the top part 22 of the carrier element 20. Here the oxidant distribution chamber 50 is provided for the supply of an oxidant, in particular a gas-mixture comprising oxygen, e.g. air, to the plurality of burner units.

The fuel distribution system 10 is preferably a ductwork 10, more preferably a piping 10 fastened by means of a force-locked connection and/or adhesive connection or positive material joint to the carrier element 20, preferably to a bottom part 21, in particular a bottom plate 21, of the carrier element 20. Preferably, the fuel distribution system comprises a duct 11, preferably a pipe 11 for the supply of a fuel medium, in particular a burner gas, to the plurality of burner units. Preferably, the fuel distribution system 10 mainly extents in an direction of projection 101, 101' perpendicular to the plane of main extension 100 over a length substantially less than 20 times, preferred substantially less than 10 times, even more preferred substantially less than 5 times or equal to a diameter of a cross-section of a duct 11 or pipe 11 of the fuel distribution system. Preferably the extension of the fuel distribution system parallel to the direction of projection 101, 101' is less or equal to the extension of a burner unit 41 of the plurality of burner units 40 or the carrier element 20 parallel to the direction of projection 101, 101'. Herein, the direction of projection 101, 101' is also called upward direction 101 or downward direction 101', wherein the upward direction 101 and downward direction 101' are anti-parallel to each other, wherein the upward direction 101 points from the bottom part 21 to the top part 22 of the carrier element 20.

A coupling unit 31 of the plurality of coupling units 30 comprises a coupling element 32. Here said coupling unit 31 preferably refers to each of the plurality of coupling units 30. The coupling unit 31 preferably comprises a recess 33, which here extents in the direction of projection 101, 101' completely through the carrier element 20. Here, the coupling unit 30 comprises a coupling element 32 arranged on the bottom part 21, and preferably a further coupling element 32' arranged on the top part 22, wherein the recess preferably comprises a recess-part arranged on the bottom part 21 and a further recess-part arranged on the top part 22. Here the coupling element 32 is adhesively connected, in particular welded, to the bottom part 21 of the carrier element 20.

The coupling element 32 of said coupling unit 31 is in fluid communication with the fuel distribution system 10. The fuel medium is supplied from the fuel distribution system 10 by conveying the fuel medium from the duct 11, firstly, only through the coupling element 32 and then, secondly, only through the burner unit 41.

A burner unit 41 of the plurality of burner units 40 is arranged on the carrier element 20. Here said burner unit 41 preferably refers to each of the plurality of burner units 40. Said burner unit 41 mainly extents parallel to the direction of projection 101, 101'. Said burner unit 41 comprises a connector element 42 and a burner element 43. The connector element 42 is in fluid communication with the burner element 43 and the connector element 42 is in fluid communication with the coupling element 32. Preferably, the burner element 43 is a burner tube 43 being configured to convey the fuel medium, which is supplied by the fuel distribution system 10, from the fuel source 2' through the duct 11, the coupling element 32 and the connector element 42 to the head end 43" of the burner element. Here the burner element 43 comprises an opening 46 at the head end 43". Here, the head end 43" of the burner element 43 is located on an opposite site with regard to the connector element 42. Here, the connector element 42 is fastened to the burner element 43 at a tail end 43' of the burner element in a tail region 41' of the burner unit 41.

The connector element 42 is reversibly connected to the coupling element 32 of said coupling unit 31. The connection between the coupling element 32 and the connector element 42 is preferably a positive form-locked and/or force-locked connection. Here, the burner unit 41 further comprises an oxidant element 44, in particular an oxidant tube 44 concentrically arranged at least around the head end 43" of the burner tube 43. Thereby, preferably a two component nozzle 45 is formed by a head end 44", which is also called cap 44", of the oxidant tube 44 and a head end 43" of the burner tube 43. Here the burner unit 41 comprises the nozzle 45 in a head region 41" of the burner unit 41. Preferably, the cap 44" comprises a further opening 46' for the release of a combustible mixture into a reaction chamber 3 of the reactor 2. Preferably, the cap 44" of the oxidant element 44 is reversibly or irreversibly connected, e.g. welded, to a tail end 44' of the oxidant element.

Preferably, the oxidant tube 44 comprises one or more guiding means, in particular wing elements. The one or more guiding means is/are preferably fastened to an inner wall of the oxidant tube 44 in a tail region 44' of the oxidant tube 44.

Here, the oxidant tube 44 is fastened to the top part 22 of the carrier element 20. Here the oxidant tube 44 comprises a further connector element 42', which is adhesively connected, e.g. welded, to the oxidant tube 44 at its tail end 44'. Here the further connector element 42' serves to fasten the oxidant tube 44 at the further coupling element 32' to the top part 22 of the carrier element by means of a forced lock connection, e.g. screw and/or weld connection.

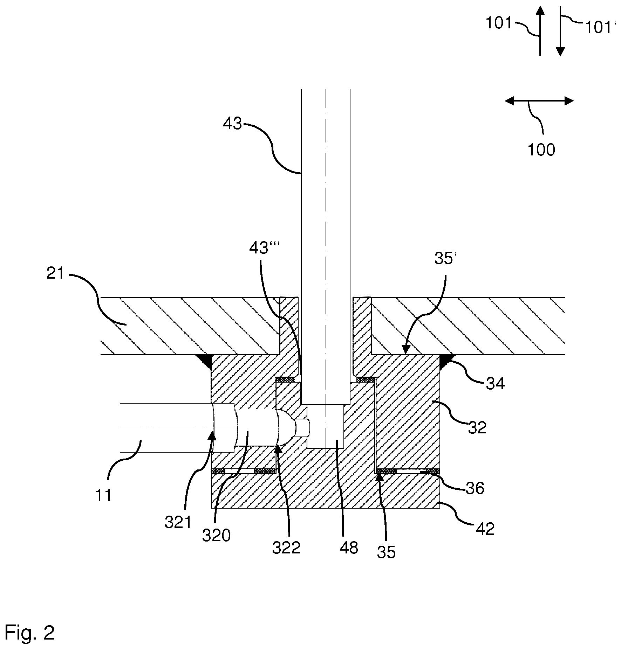

In **Figure 2** an embodiment of the heating module 1 according to the present invention is illustrated schematically in an enlarged view. Here the connector element 42 of the burner unit 41 and the coupling element 32 of the coupling unit 31 are shown, wherein the coupling element 32 is adhesively connected, e.g. by a welded joint 34, and by means of a further form-locked connection 35' to the bottom part 21 or bottom plate 21 of the carrier element.

Here the connector element 42 is plugged into the coupling element 32 in such a way, that the burner tube 43 is in fluid communication with the duct 11 of the fuel distribution system only via the coupling element 32 and the connector element 42, i.e. in such a way that the connection between the coupling element 32 and the connector element 42 does not leak. Here the connection between the connector element 42 and the coupling element 32 is a positive form locked connection. Furthermore, the connector element 42 and the coupling element 32 are connected by means of a force-locked connection 36, e.g. a screw fitted connection 36.

Here, the coupling element 32 comprises a coupling channel 320 having a first coupling interface configured to couple the coupling channel 320 to the duct 11 and a second interface to couple the coupling channel to the connector element 42. Thereby, the coupling channel 320 is in fluid communication with the duct 11 and with a connector channel 48 of the connector element 42. Here, the connector channel 48 is in fluid communication with the burner tube 43, which is connected to the connector element 42 by means of a positive form locked connection and/or an adhesive connection, here a further welded joint 43"'. Here, the burner tube 43 mainly extents parallel to the direction of projection 101, 101' and the duct 11 or pipe 11 extents mainly parallel to the plane of main extension 11 of the bottom part 21 of the carrier element 20.

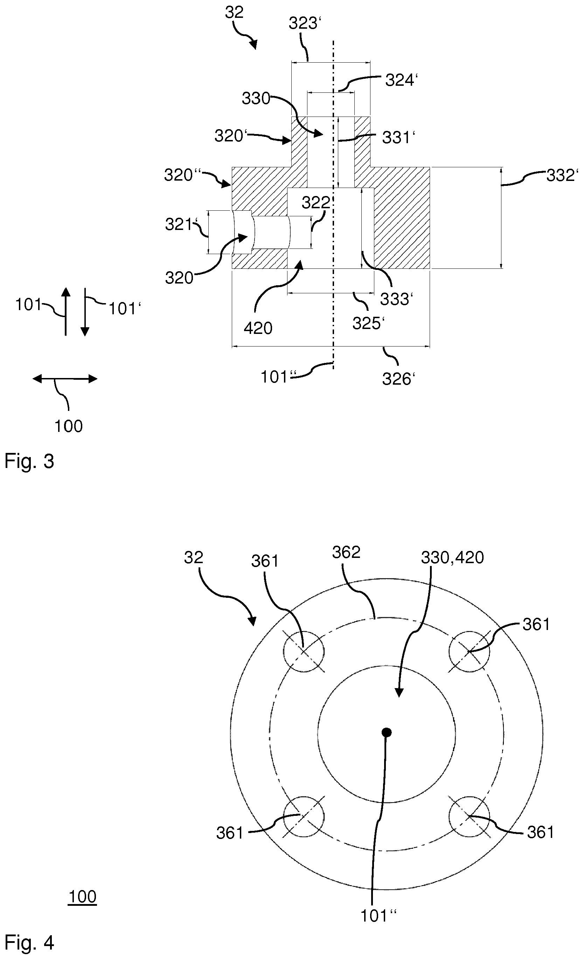

In **Figure 3** an embodiment of a coupling element 32 according to the present invention is illustrated schematically in a cross-sectional view.

Here the coupling channel 32 is substantially rotational symmetric with regard to a symmetry axis 101", wherein substantially rotational symmetric means that the coupling element 32 is rotational symmetric apart from at least one of the coupling channel 320, receptacles 361 or other individual components of the coupling element 32. The symmetry axis 101" is preferably oriented parallel to the direction of projection 101, when fastened to the bottom part 21 of the carrier element 20. Here the coupling element 32 comprises the coupling channel 320 having the first interface 321 at an outer side, i.e. in a direction perpendicular to the symmetry axis 101". The first interface 321 of the coupling channel 320 has preferably a first diameter 321' larger than a second diameter 322' of a second interface 322 of the coupling channel 320. Here, the second interface 322 faces a hollow cavity 420, which is herein called connector socket 420, of the coupling element 32. Preferably, the coupling element 32 has a substantially cylindrical shaped outline, wherein the coupling element 32 comprises a substantially cylindrical upper part 320' and a substantially cylindrical lower part 320". In a direction perpendicular to the symmetry axis 101", the cross-section of the coupling element 32 has a third diameter 323' at the upper part 320' of the coupling element 32. The upper part 320' is herein also called coupling plug 320'. According to the present invention, the coupling plug 320' is configured to connect to the bottom part 21 of the carrier element 20 by means of a positive form-locked connection, in particular by insertion of the coupling plug 320' into the recess 33 at the bottom part 21. Furthermore, the coupling element 32 comprises a cylindrical lower part 320" having a cross section with a sixth diameter 326'. The lower part 320" of the coupling element 32 is herein also called coupling base 320" and has a second height 332', which is larger than a third height 333' of the connector socket 420. According to the present invention, the coupling base 320' comprises the connector socket 420, which is configured to connect to the connector element 42 by means of a positive form-locked connection.

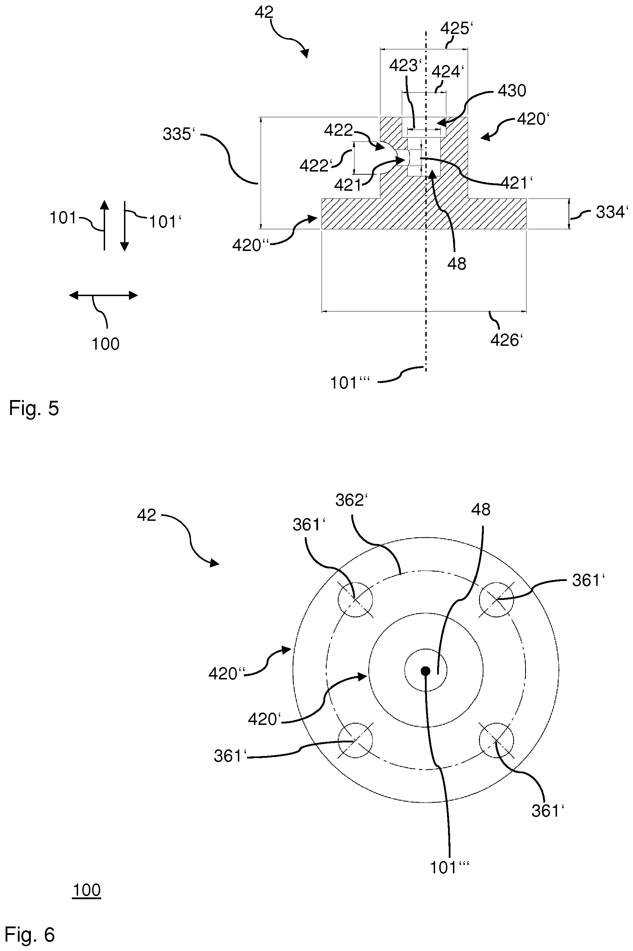

The coupling element comprises a notch 330 and the connector socket 420, wherein the notch 330 and the connector socket 420 are substantially arranged in a central region around the symmetry axis 101" of the coupling element 32. The connector socket 420 and the notch 330 together form a recess 33, 330, 420 of the coupling element 32, which extends completely through the connector element 32 in a direction parallel to the symmetry axis 101". Here, the notch 330 has a first height 331' and a fourth diameter 324' in the upward direction 101 on the upper part of the coupling element 32 and is configured to receive the burner tube 43, when the burner tube 43 is inserted, head end 43" first, in the upward direction 101 into the recess 33, 330, 420 of the coupling element 32. Here the connector socket 420 has a third height 333' and a fifth diameter 325' and is configured to receive the connector element 42 such that the connector element 42 is connected to the coupling element 32 by means of a form-locked connection. Here the third height 333' substantially equals a height of a connector plug 420' and the fifth diameter 325' substantially equals a fifth width 425' of the connector plug 420' (see Figure 5).

Here, the fourth diameter 324' of the notch 330 is smaller than the fifth diameter of the connector socket 420. It is thereby advantageously possible that the connector plug 420' is blocked with regard to a movement along the symmetry axis in the upward direction 101, when the burner element 43 is inserted into the recess-part 430, 330 of the recess of the coupling element 32 at the lower part 21 of the carrier element 20.

In **Figure 4** an embodiment of a coupling element 32 according to the present invention is illustrated schematically in a plan view. Here four receptacles 361 configured to fasten the coupling element 32, e.g. with bolts or screws, to the connector element 42 are arranged, here in a circle 362, in the lower part of the coupling element 32. The receptacles are arranged spaced apart from the coupling channel 320 (shown in Figure 3) on the plane 100 perpendicular to the symmetry axis 101". Here the notch 330 and the connector socket 420 form the recess-part of the recess 33 at the lower part 21 of the carrier element 20, when the coupling element 32 is connected to the carrier element 20.

In **Figure 5** an embodiment of a connector element 42 according to the present invention is illustrated schematically in a cross-sectional view. Here, the connector element 42 comprises a connector plug 420' and a connector base 420". Here, the connector element 42 is substantially rotationally symmetrical with regard to a further symmetry axis 101"'. Here substantially rotational symmetric means, that the connector element 42 is rotational symmetric apart from a connector duct 421, 422 or other individual components of the connector element 42. In this sense, the connector element 42 has a substantially cylindrical shaped outline, wherein the connector plug 420' has substantially cylindrical shaped outline with a diameter of a fifth width 425' and wherein the connector base 420" has a substantially cylindrical shaped outline with a diameter of a sixth width 426'. The whole connector element 42 extents along a fifth height 335' parallel to the further symmetry axis 101", wherein the base part has fourth height 334', preferably approximately four to five times, smaller than the fifth height 335'. Here, the connector channel 48 is substantially cylindrical shaped having an upper cylindrical part and a lower cylindrical part. The upper cylindrical part is preferably configured to receive the burner tube 43 and is herein also called tube socket 430. The tube socket 430 has a cross section of a diameter of a fourth width 424' smaller than the fifth width 425'. The lower part of the channel 48 has a diameter of a third width 423'. Preferably the third width 423' of the lower part of the connector channel is smaller than the fourth width 424' of the tube socket 430. Here, the connector channel 48 is in fluid communication with a connector duct 421, 422, wherein the connector duct 421, 422 comprises a first duct 421 and a second duct 422. Preferably, the first duct 421 has a diameter with a first width 421' and the second duct 422 has an extension of a second width 422' parallel to the further symmetry axis 101", wherein the second width 422' is preferably larger than the first width 421'. The first duct 421 is arranged closer to the further symmetry axis 101" than the second duct 422. Preferably, the first duct 421 comprises an interface to the connector channel 48 and an interface to the second duct 422, the second duct 422 comprises an interface to the first duct 421 and to the surrounding of the connector plug 420'. Preferably, the connector element 421 comprises one or more, preferably four, separate, spaced apart first ducts 421. Preferably, the second duct 422 has a ring shaped cross-section in a plane 100 perpendicular to the further symmetry axis 101". The second duct 422 preferably runs completely around a circumference of the connector plug 420', thereby connecting the one or more first ducts 421 in fluid communication with each other. Preferably the connector channel 48 is in fluid communication with each of one or more, preferably four, first ducts 421 of the connector ducts 421, 422. Preferably the connector channel 48 is via the first ducts 421 - in fluid communication with the ring shaped second duct 422.

In **Figure 6** an embodiment of a connector element 42 according to the present invention is illustrated schematically in a plan view. Here, the connector element 42 comprises the connector channel 48 arranged around the further symmetry axis 101". The connector channel 48 is in fluid communication with the connector duct 421, 422 (shown in Figure 5). Here, the arrows 420' and 420" indicate the positions of the boundary areas of the connector plug 420' and the connector base 420", respectively. The connector element 42 further comprises further receptacles 361'; here four further receptacles 361', arranged on a further circle 362' at the connector base 420". When the connector element 42 is connected to the coupling element 32, the further receptacles 361' and the receptacles 361 of the coupling base 320" are aligned in the direction of projection 101, 101' above each other such that the connector base 420" can be fastened to the coupling base 320" by means of fastening elements, e.g. a bolt or screw, inserted into each receptacle 361 and the associated further receptacle 361'.

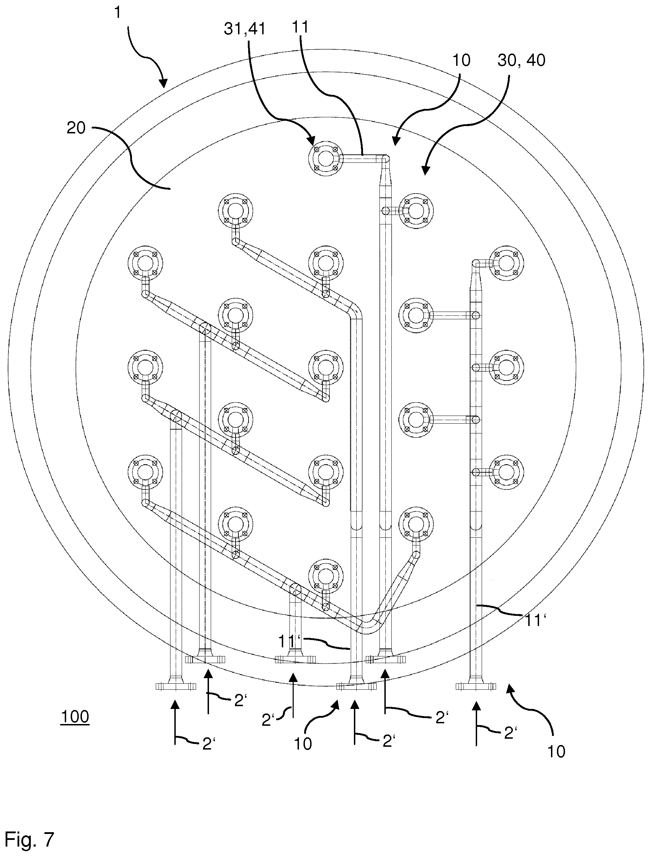

In **Figure 7** an embodiment of a heating module 1 according to the present invention is illustrated schematically in a plan view. Here, the heating module 1 is shown from the bottom side, wherein the carrier element 20 has a circular cross section. The fuel distribution system 10 is here a piping 10 comprising one or more, preferably two, inlet ducts 11' or pipes 11'. The inlet pipe 11' is in fluid communication with the fuel source 2', preferably a fuel source 2' of the reactor.

According to the present invention, all burner units 41 of the plurality of burner units 40 are only connected via one or more inlet ducts 11' or inlet pipes 11' to the fuel source 2'. Here, each burner unit 41 of the plurality of burner units 40 is in fluid communication with the fuel source 2' only via one of the one or more inlet ducts 11' or pipes 11'. It is thereby advantageously possible, that the heating module 1 can be easily attached and detached to and from the reaction chamber 3 by attaching and/or detaching the inlet pipe 11'. Here the inlet pipe 11' is reversibly connectable to the fuel source 2', such that the whole heating module 1 is easily attachable and detachable to the reaction chamber 3 of the reactor 2, i.e. without the need to attach and/or detach each burner unit 41 individually to and/or from the fuel source 2'. In particular, it is advantageously possible according to the present invention to avoid a plurality of ducts for the individual and direct connection of each burner unit 41 of the plurality of burner units 40 to the fuel source 2'. In this way, it is advantageously possible to provide a simplified heating module 1, which is easy to maintain.

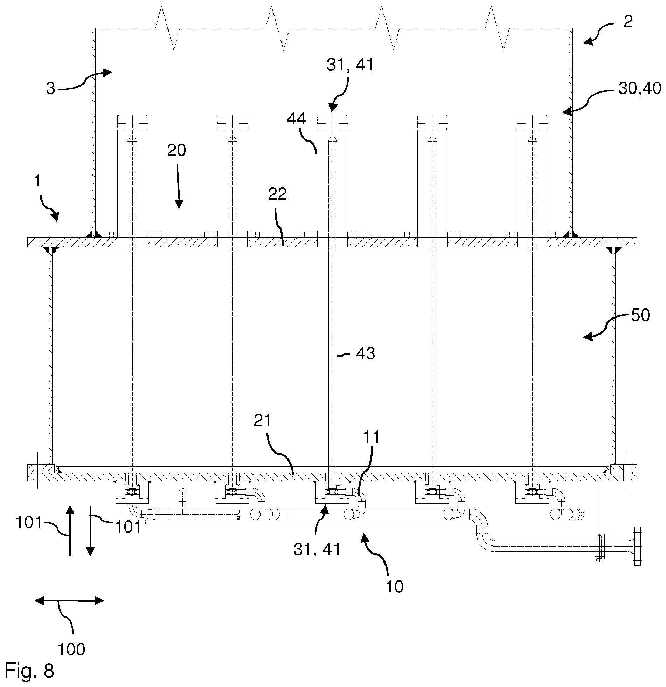

In **Figure 8** an embodiment of a heating module 1 according to the present invention is illustrated schematically in a cross-sectional view. Here, the heating module 1 is shown fixed to a chamber 3 of a reactor 2, preferably a fluidised bed reactor 2. Here, each burner unit 41 of the plurality of burner units 40 each extent substantially parallel to the upward direction 101. The carrier element 20 comprises the bottom part 21, which holds the burner tubes 43 at the associated coupling unit 31 of the plurality of coupling units 30. Moreover, each oxidant tube 44 is in fluid communication with the oxidant distribution chamber 44, preferably an air distribution chamber. Here, the top part 22 of the carrier element 20 is a top plate 22 which at the same time forms the base plate 22 of the reaction chamber 3 of the reactor 2.

According to the present invention, it is advantageously possible to perform maintenance of the heating module 1 according to the present invention, in a very efficient way. During the operation of the heating module 1 a fraction of the burner units 40 may become defective, wherein such a defective burner unit 41 comprises a defective burner element 43, which needs to be replaced by an intact burner element.

In a first maintenance step, a connector element 42 fastened to a tail end 43' of the defective burner element 43 is disconnected from a coupling element 32 of a coupling unit 31 associated with said defective burner unit 41. This may be achieved by releasing the force locked connection between the connector element 42 and the coupling element 32, e.g. by removing a screw or bolt that is inserted into the receptacles 361 and further receptacles 361'. The first maintenance step is carried out after the fuel source 2' has been disconnected from the pipe 11' that supplies the fuel medium to the defective burner unit 41 of the heating module 1.

In a second maintenance step, the defective burner element 43 is removed from a recess 33 of the coupling unit 31 of the carrier element 20 by pulling out the defective burner element 43, tail end 43" first, in the downward-direction 101'. Thereby, the connector plug 420' is removed from the connector socket 420.

In a third maintenance step, an intact burner element 43 is provided to replace the defective burner element 43. Preferably, this step is carried out for each defective burner unit 41 separately and independently from the other defective burner units 41.

In a fourth maintenance step, the intact burner element 43 is inserted into the recess 33 of the coupling unit 31, head end 43" first, into the upward-direction 101. Thereby, the connector plug 420' of the intact burner tube is inserted into the connector socket 420 of the coupling element 32 such that the connector element 42 of the intact burner tube 43 is positively form-locked to the coupling element 32.

In a fifth maintenance step, a connector element 42 fastened to the intact burner element 43 is reversibly connected to the coupling element 32. When the intact burner element 43 is plugged into the recess 33, the burner tube 43 is preferably guided by guiding means arranged on the associated oxidant element 44 of the burner unit 41. In this way, the burner tube 43 is preferably aligned concentrically with the oxidant tube 44 and fastened with regard to vibrations, such that the risk of leakage is reduced. Additionally, the connection between the burner element 43 and the coupling element 32 is hermetically sealed preferably by means of a sealing ring arranged between the connector base 420" of the connector element 42 and the coupling base 320" of the coupling element 32.

Additionally, any defective oxidant tubes 44 may be replaced independently from the burner tube 43, because the oxidant tubes 44 are separately mounted to the top part 22 of the carrier element 20. Thereby it is advantageously possible to replace only those components of the heating module 1 which are defective, while all other components are kept fixed in their dedicated position.

### REFERENCE SIGNS

- 1: Heating module
- 2: Pyrohydrolysis reactor / fluidised bed reactor
- 2': Fuel source
- 3: Reaction chamber
- 10: Fuel distribution system / ductwork / piping
- 11: duct / pipe
- 11': inlet duct / pipe
- 20: Carrier element / base plate
- 21: Bottom part of carrier element
- 22: Top part of carrier element
- 30: Plurality of coupling units
- 31: Coupling unit
- 32: Coupling element
- 32': Further coupling element
- 33: Recess
- 34: Welded joint
- 35: Form-locked connection
- 35': Further form-locked connection
- 36: Force-locked connection
- 40: Plurality of burner units
- 41: Burner unit
- 41': Tail region of burner unit
- 41": Head region of burner unit
- 42: Connector element
- 42': Further connector element
- 43: Burner element / burner tube
- 43': Tail end of burner element
- 43": Head end of burner element
- 43'": Further welded joint
- 44: Oxidant element / oxidant tube
- 44': Tail end of oxidant element
- 44": Head end of oxidant element
- 45: Two component nozzle
- 46: Opening
- 46': Further opening
- 48: Connector channel
- 50: Oxidant distribution chamber
- 100: Plane of main extension
- 101: Upward direction
- 101': Downward direction
- 101": Symmetry axis
- 101"': Further symmetry axis
- 320: Coupling channel
- 320': Coupling plug
- 320": Coupling base
- 321: First coupling interface
- 321': First diameter
- 322: Second coupling interface
- 322': Second diameter
- 323': Third diameter
- 324': Fourth diameter
- 325': Fifth diameter
- 326': Sixth diameter
- 330: Notch
- 331': First height
- 332': Second height
- 333': Third height
- 334': Fourth height
- 335': Fifth height
- 361: Receptacle
- 361': Further receptacle
- 362: Circle
- 362': Further circle
- 420: Connector socket
- 420': Connector plug
- 420": Connector base
- 421: First connector duct
- 421': First width
- 422: Second connector duct
- 422': Second width
- 423': Third width
- 424': Fourth width
- 425': Fifth width
- 426': Sixth width
- 430: Tube socket

## Claims

1. Heating module (1) for use in a pyrohydrolysis reactor (2), the heating module (1) comprising:
-- a fuel distribution system (10) being in fluid communication with a fuel source (2'),
-- a carrier element (20) having a plurality of built-in coupling units (30), wherein a coupling unit (31) of the plurality of coupling units (30) comprises a coupling element (32), wherein the coupling element (32) of said coupling unit (31) is in fluid communication with the fuel distribution system (10),
-- a plurality of burner units (40) arranged on the carrier element (20), wherein a burner unit (41) of the plurality of burner units (40) comprises a connector element (42) and a burner element (43), wherein the connector element (42) is in fluid communication with the burner element (43), wherein the connector element (42) is reversibly connected to the coupling element (32) of said coupling unit (31) and wherein the connector element (42) is in fluid communication with the coupling element (32) of said coupling unit (31).

2. Heating module (1) according to claim 1, **characterized in that** the burner unit (41) of the plurality of burner units (40) further comprises an oxidant element (44) for the supply of an oxidant medium to the burner unit (41), wherein the oxidant element (44) is reversibly connected to the carrier element (20), wherein the burner element (41) and the oxidant element (44) are preferably independently of each other attachable to the carrier element (20) and/or independently of each other detachable from the carrier element (20).

3. Heating module (1) according to claim 1 or 2, **characterized in that** said coupling unit (31) comprises a recess (33) extending completely through the carrier element (20) in an upward-direction (101) pointing from a bottom part (21) of the carrier element (20) to a top part (22) of the carrier element (20), wherein the bottom part (21) and the top part (22) each extend substantially parallel to a plane of main extension (100) of the carrier element (20), wherein the burner element (43) of said burner unit (41) is insertable into the recess (33), wherein the burner element (43) of said burner unit (41) is preferably a burner tube (43), wherein the recess (33) of said coupling unit (31) is preferably configured to positively lock the burner tube (43) with regard to a movement of the burner tube (43) parallel to the plane of main extension (100) of the carrier element (20).

4. Heating module (1) according to one of the preceding claims, **characterized in that** the burner element (43) of said burner unit (41) has a tail end (43') and a head end (43"), wherein the connector element (42) of said burner unit (41) is fastened to the tail end (43') of the burner element (43), wherein the burner element (43) is insertable, head end (43") first, in the upward-direction (101), from the bottom part (21) to the top part (22), into the recess (33) of said coupling unit (31), wherein the coupling element (32) of said coupling unit (31) and the connector element (42) of said burner unit (41) are configured to fasten the burner element (43) to the bottom part (21) of the carrier element (20) by means of a positive-locking connection between the coupling element (32) and the connector element (42).

5. Heating module (1) according to one of the preceding claims, **characterized in that** the fuel distribution system (10) is fastened to the carrier element (20), preferably on the bottom part (21) of the carrier element (20), by means of a force-locked and/or adhesive connection or **in that** the fuel distribution system (10) forms an integral part of the carrier element (20).

6. Heating module (1) according to one of the preceding claims, **characterized in that** the burner element (42) of said burner unit (41) is fastened to the bottom part (21) of the carrier element (20) by means of a form-locked connection (35) and/or force-locked connection (36) between the coupling element (32) of said coupling unit (31) and the connector element (42) of said burner unit (41).

7. Heating module (1) according to one of the preceding claims, **characterized in that** the carrier element (20) is reversibly connectable to a reaction chamber (3) of the pyrohydrolysis reactor (2), wherein the carrier element (20) is preferably a base plate (20), of a fluidised bed reactor (2), wherein an inner wall, preferably a bottom wall, of the reaction chamber (3) of the reactor (2) is at least partially formed by the top part (22) of the carrier element (20).

8. Heating module (1) according to one of the preceding claims, **characterized in that** the carrier element (20) comprises an oxidant distribution chamber (50) being arranged between the top part (22) and the bottom part (21) of the carrier element (20), wherein the oxidant distribution chamber (50) is in fluid communication with an oxidant source and the plurality of burner units (40).

9. Heating module (1) according to one of the preceding claims, **characterized in that** said burner unit (41) comprises a further connector element (42') and an oxidant element (44), wherein the further connector element (42') is reversibly connected to said coupling unit (31) on the top part (22) of the carrier element (20), wherein the oxidant element (44) is in fluid communication with the oxidant distribution chamber (50) of the carrier element (20), wherein a two component nozzle (45) is formed by the oxidant element (44) and the burner element (43) in a head region (41") of said burner unit (41), wherein the two component nozzle (45) is configured to mix a fuel medium supplied through an opening (46) of the head end (43") of the burner tube (43) with an oxidant medium supplied through the oxidant distribution chamber (50) to the oxidant element (44), wherein the oxidant element (44) comprises a further opening (46') for releasing a combustible mixture of oxidant medium and fuel medium into the reaction chamber (3).

10. Heating module (1) according to one of the preceding claims, **characterized in that** the oxidant element (44) is an oxidant tube (44) concentrically arranged around the burner tube (43), wherein the burner tube (44) terminates inside the oxidant tube (44), wherein a guiding means is arranged on an inner wall of the oxidant tube (44), wherein the burner tube (43) is positively locked by the guiding means.

11. Pyrohydrolysis reactor (2), in particular fluidised bed reactor (2), configured to carry out a pyrohydrolysis process, wherein the reactor (2) comprises a reaction chamber (3) with a heating module (1) according to one of the preceding claims.

12. Method for maintaining a heating module (1) according to one of claims 1 to 10, wherein the plurality of burner units (40) comprise a fraction of defective burner units (40), wherein a defective burner unit (41) of the fraction of defective burner units (40) comprises a defective burner element (43), wherein, in a first maintenance step, a connector element (42) fastened to a tail end (43') of the defective burner element (43) is disconnected from a coupling element (32) of a coupling unit (31) associated with said defective burner unit (41), wherein, in a second maintenance step, the defective burner element (43) is removed from a recess (33) of the coupling unit (31) of the carrier element (20) by pulling out the defective burner element (43), tail end (43") first, in the downward-direction (101'), wherein, in a third maintenance step, an intact burner element (43) is provided to replace the defective burner element (43), wherein, in a fourth maintenance step, the intact burner element (43) is inserted into the recess (33) of the coupling unit (31), head end (43") first, into the upward-direction (101), wherein, in a fifth maintenance step, a connector element (42) fastened to the intact burner element (43) is reversibly connected to the coupling element (32).

13. Method according to claim 12, **characterized in that** a further defective burner unit (41) of the fraction of defective burner units (40) comprises a defective oxidant element (44), wherein the defective oxidant element (44) is detached from the carrier element (20), wherein an intact oxidant element (44) is reversibly connected to the carrier element (20).

14. Method for fabricating a heating module (1) for use in a pyrohydrolysis reactor (2), in particular a fluidised bed reactor (2), wherein, in a first step, a fuel distribution system (10) is provided and brought in fluid communication with a fuel source (2'), wherein, in a second step, a carrier element (20) having a plurality of built-in coupling units (30) is provided, wherein each coupling unit (31) of the plurality of coupling units (30) is provided with a coupling element (32), wherein the coupling element (32) is coupled in fluid communication with the fuel distribution system (10), wherein, in a third step, a plurality of burner units (40) are arranged on the carrier element (20), wherein a burner unit (41) of the plurality of burner units (40) is provided with a connector element (42) and a burner element (43), wherein the connector element (42) is brought in fluid communication with the burner element (43), wherein the connector element (42) is reversibly connected to the coupling element (32) of said coupling unit (31) and wherein the connector element (42) is brought in fluid communication with the coupling element (32) of said coupling unit (31).

15. Method according to claim 14, **characterized in that** in a fourth step, temporally after at least one or all of the first step, the second step and the third step, the carrier element (20) is reversibly fastened to a reaction chamber (3) of the pyrohydrolysis reactor (2).

## Patentansprüche

1. Heizmodul (1) für die Verwendung in einem Pyrohydrolysereaktor (2), wobei das Heizmodul (1) umfasst:
- ein Brennstoffverteilungssystem (10) in Fluidverbindung mit einer Brennstoffquelle (2'),
- ein Trägerelement (20) mit einer Vielzahl von eingebauten Kupplungseinheiten (30), wobei eine Kupplungseinheit (31) aus der Vielzahl von Kupplungseinheiten (30) ein Kupplungselement (32) umfasst, wobei das Kupplungselement (32) der Kupplungseinheit (31) in Fluidverbindung mit dem Brennstoffverteilungssystem (10) steht,
- eine Vielzahl von Brennereinheiten (40), die auf dem Trägerelement (20) angeordnet sind, wobei eine Brennereinheit (41) aus der Vielzahl von Brennereinheiten (40) ein Verbindungselement (42) und ein Brennerelement (43) umfasst, wobei das Verbindungselement (42) in Fluidverbindung mit dem Brennerelement (43) steht, wobei das Verbindungselement (42) reversibel mit dem Kupplungselement (32) der Kupplungseinheit (31) verbunden ist und wobei das Verbindungselement (42) in Fluidverbindung mit dem Kupplungselement (32) der Kupplungseinheit (31) steht.

2. Heizmodul (1) gemäß Anspruch 1, **dadurch gekennzeichnet, dass** die Brennereinheit (41) aus der Vielzahl von Brennereinheiten (40) ferner ein Oxidationsmittelelement (44) für die Zufuhr eines Oxidationsmittelmediums zu der Brennereinheit (41) umfasst, wobei das Oxidationsmittelelement (44) reversibel mit dem Trägerelement (20) verbunden ist, wobei das Brennerelement (41) und das Oxidationsmittelelement (44) vorzugsweise unabhängig voneinander auf dem Trägerelement (20) befestigbar sind und/oder unabhängig voneinander von dem Trägerelement (20) ablösbar sind.

3. Heizmodul (1) gemäß Anspruch 1 oder 2, **dadurch gekennzeichnet, dass** die Kupplungseinheit (31) eine Aufnahme (33) umfasst, die in einer Aufwärtsrichtung (101), die von einem Bodenteil (21) des Trägerelements (20) zu einem oberen Teil (22) des Trägerelements (20) zeigt, vollständig durch das Trägerelement (20) verläuft, wobei der Bodenteil (21) und der obere Teil (22) jeweils im Wesentlichen parallel zu der Hauptausdehnungsebene (100) des Trägerelements (20) verlaufen, wobei das Brennerelement (43) der Brennereinheit (41) in die Aufnahme (33) einführbar ist, wobei das Brennerelement (43) der Brennereinheit (41) vorzugsweise ein Brennerrohr (43) ist, wobei die Aufnahme (33) der Kupplungseinheit (31) vorzugsweise dafür gestaltet ist, das Brennerrohr (43) bezüglich einer Bewegung des Brennerrohrs (43) parallel zu der Hauptausdehnungsebene (100) des Trägerelements (20) formschlüssig festzuhalten.

4. Heizmodul (1) gemäß einem der vorstehenden Ansprüche, **dadurch gekennzeichnet, dass** das Brennerelement (43) der Brennereinheit (41) ein hinteres Ende (43') und ein Kopfende (43") aufweist, wobei das Verbindungselement (42) der Brennereinheit (41) an dem hinteren Ende (43') des Brennerelements (43) befestigt ist, wobei das Brennerelement (43) mit dem Kopfende (43") voran in der Aufwärtsrichtung (101) von dem Bodenteil (21) zu dem oberen Teil (22) in die Aufnahme (33) der Kupplungseinheit (31) einführbar ist, wobei das Kupplungselement (32) der Kupplungseinheit (31) und das Verbindungselement (42) der Brennereinheit (41) dafür gestaltet sind, durch eine formschlüssige Verbindung zwischen dem Kupplungselement (32) und dem Verbindungselement (42) das Brennerelement (43) an dem Bodenteil (21) des Trägerelements (20) zu befestigen.

5. Heizmodul (1) gemäß einem der vorstehenden Ansprüche, **dadurch gekennzeichnet, dass** das Brennstoffverteilungssystem (10) durch eine kraftschlüssige Verbindung und/oder eine Klebstoffverbindung an dem Trägerelement (20) befestigt ist, vorzugsweise an dem Bodenteil (21) des Trägerelements (20), oder dass das Brennstoffverteilungssystem (10) einen integralen Teil des Trägerelements (20) bildet.

6. Heizmodul (1) gemäß einem der vorstehenden Ansprüche, **dadurch gekennzeichnet, dass** das Brennerelement (42) der Brennereinheit (41) durch eine formschlüssige Verbindung (35) und/oder eine kraftschlüssige Verbindung (36) zwischen dem Kupplungselement (32) der Kupplungseinheit (31) und dem Verbindungselement (42) der Brennereinheit (41) an dem Bodenteil (21) des Trägerelements (20) befestigt ist.

7. Heizmodul (1) gemäß einem der vorstehenden Ansprüche, **dadurch gekennzeichnet, dass** das Trägerelement (20) reversibel mit einer Reaktionskammer (3) des Pyrohydrolysereaktors (2) verbindbar ist, wobei das Trägerelement (20) vorzugsweise eine Grundplatte (20) eines Wirbelschichtreaktors (2) ist, wobei eine Innenwand, vorzugsweise eine Bodenwand, der Reaktionskammer (3) des Reaktors (2) wenigstens teilweise durch den oberen Teil (22) des Trägerelements (20) gebildet wird.

8. Heizmodul (1) gemäß einem der vorstehenden Ansprüche, **dadurch gekennzeichnet, dass** das Trägerelement (20) eine Oxidationsmittelverteilerkammer (50) umfasst, die zwischen dem oberen Teil (22) und dem Bodenteil (21) des Trägerelements (20) angeordnet ist, wobei die Oxidationsmittelverteilerkammer (50) in Fluidverbindung mit einer Oxidationsmittelquelle und der Vielzahl von Brennereinheiten (40) steht.

9. Heizmodul (1) gemäß einem der vorstehenden Ansprüche, **dadurch gekennzeichnet, dass** die Brennereinheit (41) ein weiteres Verbindungselement (42') und ein Oxidationsmittelelement (44) umfasst, wobei das weitere Verbindungselement (42') reversibel mit der Kupplungseinheit (31) an dem oberen Teil (22) des Trägerelements (20) verbunden ist, wobei das Oxidationsmittelelement (44) in Fluidverbindung mit der Oxidationsmittelverteilerkammer (50) des Trägerelements (20) steht, wobei von dem Oxidationsmittelelement (44) und dem Brennerelement (43) in einem Kopfbereich (41") der Brennereinheit (41) eine Zweikomponentendüse (45) gebildet wird, wobei die Zweikomponentendüse (45) dafür gestaltet ist, ein Brennstoffmedium, das durch eine Öffnung (46) des Kopfendes (43") des Brennerrohrs (43) zugeführt wird, mit einem Oxidationsmittelmedium zu mischen, das durch die Oxidationsmittelverteilerkammer (50) zu dem Oxidationsmittelelement (44) zugeführt wird, wobei das Oxidationsmittelelement (44) eine weitere Öffnung (46') zum Abgeben eines verbrennbaren Gemischs aus Oxidationsmittelmedium und Brennstoffmedium in die Reaktionskammer (3) umfasst.

10. Heizmodul (1) gemäß einem der vorstehenden Ansprüche, **dadurch gekennzeichnet, dass** das Oxidationsmittelelement (44) ein Oxidationsmittelrohr (44) ist, das konzentrisch um das Brennerrohr (43) angeordnet ist, wobei das Brennerrohr (44) innerhalb des Oxidationsmittelrohrs (44) endet, wobei an einer Innenwand des Oxidationsmittelrohrs (44) eine Führungseinrichtung angeordnet ist, wobei das Brennerrohr (43) von dem Führungsmittel formschlüssig festgehalten wird.

11. Pyrohydrolysereaktor (2), insbesondere Wirbelschichtreaktor (2), der dafür gestaltet ist, ein Pyrohydrolyseverfahren durchzuführen, wobei der Reaktor (2) eine Reaktionskammer (3) mit einem Heizmodul (1) gemäß einem der vorstehenden Ansprüche umfasst.

12. Verfahren zur Wartung eines Heizmoduls (1) gemäß einem der Ansprüche 1 bis 10, wobei die Vielzahl von Brennereinheiten (40) einen Anteil an defekten Brennereinheiten (40) aufweist, wobei eine defekte Brennereinheit (41) aus dem Anteil an defekten Brennereinheiten (40) ein defektes Brennerelement (43) umfasst, wobei bei einem ersten Wartungsschritt ein Verbindungselement (42), das an dem hinteren Ende (43') des defekten Brennerelements (43) befestigt ist, von einem Kupplungselement (32) einer Kupplungseinheit (31), die mit der defekten Brennereinheit (41) verbunden ist, gelöst wird, wobei bei einem zweiten Wartungsschritt das defekte Brennerelement (43) aus einer Aufnahme (33) der Kupplungseinheit (31) des Trägerelements (20) entfernt wird, indem das defekte Brennerelement (43) mit dem hinteren Ende (43") voran in der Abwärtsrichtung (101') herausgezogen wird, wobei bei einem dritten Wartungsschritt ein intaktes Brennerelement (43) bereitgestellt wird, um das defekte Brennerelement (43) zu ersetzen, wobei bei einem vierten Wartungsschritt das intakte Brennerelement (43) mit dem Kopfende (43") voran in der Aufwärtsrichtung (101) in die Aufnahme (33) der Kupplungseinheit (31) eingeführt wird, wobei bei einem fünften Wartungsschritt ein Verbindungselement (42), das an dem intakten Brennerelement (43) befestigt ist, reversibel mit dem Kupplungselement (32) verbunden wird.

13. Verfahren gemäß Anspruch 12, **dadurch gekennzeichnet, dass** eine weitere defekte Brennereinheit (41) aus dem Anteil an defekten Brennereinheiten (40) ein defektes Oxidationsmittelelement (44) umfasst, wobei das defekte Oxidationsmittelelement (44) von dem Trägerelement (20) gelöst wird, wobei ein intaktes Oxidationsmittelelement (44) reversibel mit dem Trägerelement (20) verbunden wird.

14. Verfahren zur Herstellung eines Heizmoduls (1) für die Verwendung in einem Pyrohydrolysereaktor (2), insbesondere einem Wirbelschichtreaktor (2), wobei bei einem ersten Schritt ein Brennstoffverteilungssystem (10) bereitgestellt und in Fluidverbindung mit einer Brennstoffquelle (2') gebracht wird, wobei bei einem zweiten Schritt ein Trägerelement (20) mit einer Vielzahl von eingebauten Kupplungseinheiten (30) bereitgestellt wird, wobei jede Kupplungseinheit (31) aus der Vielzahl von Kupplungseinheiten (30) mit einem Kupplungselement (32) versehen wird, wobei das Kupplungselement (32) in Fluidverbindung mit dem Brennstoffverteilungssystem (10) gekoppelt wird, wobei bei einem dritten Schritt eine Vielzahl von Brennereinheiten (40) auf dem Trägerelement (20) angeordnet wird, wobei eine Brennereinheit (41) aus der Vielzahl von Brennereinheiten (40) mit einem Verbindungselement (42) und ein Brennerelement (43) versehen wird, wobei das Verbindungselement (42) in Fluidverbindung mit dem Brennerelement (43) gebracht wird, wobei das Verbindungselement (42) reversibel mit dem Kupplungselement (32) der Kupplungseinheit (31) verbunden wird und wobei das Verbindungselement (42) in Fluidverbindung mit dem Kupplungselement (32) der Kupplungseinheit (31) gebracht wird.

15. Verfahren gemäß Anspruch 14, **dadurch gekennzeichnet, dass** bei einem vierten Schritt, der zeitlich nach wenigstens einem oder allen von dem ersten Schritt, dem zweiten Schritt und dem dritten Schritt erfolgt, das Trägerelement (20) reversibel an eine Reaktionskammer (3) des Pyrohydrolysereaktors (2) befestigt wird.

## Revendications

1. Module de chauffage (1) destiné à être utilisé dans un réacteur de pyrohydrolyse (2), le module de chauffage (1) comprenant :
- un système de distribution de carburant (10) qui est en communication fluidique avec une source de carburant (2'),
- un élément de support (20) ayant une pluralité d'unités de couplage intégrées (30), dans lequel une unité de couplage (31) de la pluralité d'unités de couplage (30) comprend un élément de couplage (32), dans lequel l'élément de couplage (32) de ladite unité de couplage (31) est en communication fluidique avec le système de distribution de carburant (10),
- une pluralité d'unités de brûleur (40) disposées sur l'élément de support (20), dans lequel une unité de brûleur (41) de la pluralité d'unités de brûleur (40) comprend un élément de raccord (42) et un élément de brûleur (43), dans lequel l'élément de raccord (42) est en communication fluidique avec l'élément de brûleur (43), dans lequel l'élément de raccord (42) est raccordé de manière réversible à l'élément de couplage (32) de ladite unité de couplage (31) et dans lequel l'élément de raccord (42) est en communication fluidique avec l'élément de couplage (32) de ladite unité de couplage (31).

2. Module de chauffage (1) selon la revendication 1, **caractérisé en ce que** l'unité de brûleur (41) de la pluralité d'unités de brûleur (40) comprend en outre un élément oxydant (44) pour la fourniture d'un milieu oxydant à l'unité de brûleur (41), dans lequel l'élément oxydant (44) est raccordé de manière réversible à l'élément de support (20), dans lequel l'élément de brûleur (41) et l'élément oxydant (44) peuvent, de préférence, indépendamment l'un de l'autre, être fixés à l'élément de support (20) et/ou, indépendamment l'un de l'autre, peuvent être détachés de l'élément de support (20).

3. Module de chauffage (1) selon la revendication 1 ou 2, **caractérisé en ce que** ladite unité de couplage (31) comprend un renfoncement (33) s'étendant complètement à travers l'élément de support (20) dans une direction allant vers le haut (101) pointant depuis une partie inférieure (21) de l'élément de support (20) vers une partie supérieure (22) de l'élément de support (20), dans lequel la partie inférieure (21) et la partie supérieure (22) s'étendent sensiblement de façon parallèle à un plan d'une extension principale (100) de l'élément de support (20), dans lequel l'élément de brûleur (43) de ladite unité de brûleur (41) peut être inséré dans le renfoncement (33), dans lequel l'élément de brûleur (43) de ladite unité de brûleur (41) est, de préférence, un tube de brûleur (43), dans lequel le renfoncement (33) de ladite unité de couplage (31) est, de préférence, configuré pour autoverrouiller le tube de brûleur (43) par rapport à un mouvement du tube de brûleur (43) de façon parallèle au plan d'une extension principale (100) de l'élément de support (20).

4. Module de chauffage (1) selon l'une quelconque des revendications précédentes, **caractérisé en ce que** l'élément de brûleur (43) de ladite unité de brûleur (41) comporte une extrémité arrière (43') et une extrémité avant (43"), dans lequel l'élément de raccord (42) de ladite unité de brûleur (41) est fixé à l'extrémité arrière (43') de l'élément de brûleur (43), dans lequel l'élément de brûleur (43) peut être inséré, l'extrémité avant (43") d'abord, dans la direction allant vers le haut (101), depuis la partie inférieure (21) vers la partie supérieure (22), dans le renfoncement (33) de ladite unité de couplage (31), dans lequel l'élément de couplage (32) de ladite unité de couplage (31) et l'élément de raccord (42) de ladite unité de brûleur (41) sont configurés pour fixer l'élément de brûleur (43) à la partie inférieure (21) de l'élément de support (20) au moyen d'une liaison à autoverrouillage entre l'élément de couplage (32) et l'élément de raccord (42) .

5. Module de chauffage (1) selon l'une quelconque des revendications précédentes, **caractérisé en ce que** le système de distribution de carburant (10) est fixé à l'élément de support (20), de préférence sur la partie inférieure (21) de l'élément de support (20), au moyen d'une liaison verrouillée de force et/ou d'une liaison adhésive **en ce que** le système de distribution de carburant (10) forme une partie intégrale de l'élément de support (20).

6. Module de chauffage (1) selon l'une quelconque des revendications précédentes, **caractérisé en ce que** l'élément de brûleur (42) de ladite unité de brûleur (41) est fixé à la partie inférieure (21) de l'élément de support (20) au moyen d'une liaison par complémentarité de formes (35) et/ou d'une liaison verrouillée de force (36) entre l'élément de couplage (32) de ladite unité de couplage (31) et l'élément de raccord (42) de ladite unité de brûleur (41) .

7. Module de chauffage (1) selon l'une quelconque des revendications précédentes, **caractérisé en ce que** l'élément de support (20) peut être raccordé de manière réversible à une chambre de réaction (3) du réacteur de pyrohydrolyse (2), dans lequel l'élément de support (20) est, de préférence, une plaque de base (20) d'un réacteur à lit fluidisé (2), dans lequel une paroi interne, de préférence une paroi inférieure, de la chambre de réaction (3) du réacteur (2) est au moins partiellement formée par la partie supérieure (22) de l'élément de support (20) .

8. Module de chauffage (1) selon l'une quelconque des revendications précédentes, **caractérisé en ce que** l'élément de support (20) comprend une chambre de distribution d'oxydant (50) qui est disposée entre la partie supérieure (22) et la partie inférieure (21) de l'élément de support (20), dans lequel la chambre de distribution d'oxydant (50) est en communication fluidique avec une source d'oxydant et la pluralité d'unités de brûleur (40).

9. Module de chauffage (1) selon l'une quelconque des revendications précédentes, **caractérisé en ce que** ladite unité de brûleur (41) comprend un autre élément de raccord (42') et un élément oxydant (44), dans lequel l'autre élément de raccord (42') est raccordé de manière réversible à ladite unité de couplage (31) sur la partie supérieure (22) de l'élément de support (20), dans lequel l'élément oxydant (44) est en communication fluidique avec la chambre de distribution d'oxydant (50) de l'élément de support (20), dans lequel une buse à deux composants (45) est formée par l'élément oxydant (44) et l'élément de brûleur (43) dans une région avant (41") de ladite unité de brûleur (41), dans lequel la buse à deux composants (45) est configurée pour mélanger un milieu de carburant fourni à travers une ouverture (46) de l'extrémité avant (43") du tube de brûleur (43) avec un milieu oxydant fourni par le biais de la chambre de distribution d'oxydant (50) à l'élément oxydant (44), dans lequel l'élément oxydant (44) comprend une autre ouverture (46') pour libérer un mélange combustible de milieu oxydant et de milieu de carburant dans la chambre de réaction (3).

10. Module de chauffage (1) selon l'une quelconque des revendications précédentes, **caractérisé en ce que** l'élément oxydant (44) est un tube oxydant (44) disposé de manière concentrique autour du tube de brûleur (43), dans lequel le tube de brûleur (44) se termine à l'intérieur du tube d'oxydant (44), dans lequel un moyen de guidage est disposé sur une paroi interne du tube d'oxydant (44), dans lequel le tube de brûleur (43) est autoverrouillé par le moyen de guidage

11. Réacteur de pyrohydrolyse (2), en particulier un réacteur à lit fluidisé (2), configuré pour mettre en oeuvre un processus de pyrohydrolyse, dans lequel le réacteur (2) comprend une chambre de réaction (3) ayant un module de chauffage (1) selon l'une quelconque des revendications précédentes.

12. Procédé pour conserver un module de chauffage (1) selon l'une quelconque des revendications 1 à 10, dans lequel la pluralité d'unités de brûleur (40) comprennent une fraction d'unités de brûleur défectueuses (40), dans lequel une unité de brûleur défectueuse (41) de la fraction d'unités de brûleur défectueuses (40) comprend un élément de brûleur défectueux (43), dans lequel, au cours d'une première étape de maintenance, un élément de raccord (42) fixé à une extrémité arrière (43') de l'élément de brûleur défectueux (43) est désolidarisé d'un élément de couplage (32) d'une unité de couplage (31) associé à ladite unité de brûleur défectueux (41), dans lequel, au cours d'une deuxième étape de maintenance, l'élément de brûleur défectueux (43) est retiré d'un renfoncement (33) de l'unité de couplage (31) de l'élément de support (20) en enlevant l'élément de brûleur défectueux (43), l'extrémité arrière (43") d'abord, dans la direction allant vers le bas (101'), dans lequel, au cours d'une troisième étape de maintenance, un élément de brûleur intact (43) est disposé pour remplacer l'élément de brûleur défectueux (43), dans lequel, au cours d'une quatrième étape de maintenance, l'élément de brûleur intact (43) est inséré dans le renfoncement (33) de l'unité du couplage (31), l'extrémité avant (43") d'abord, dans la direction allant vers le haut (101), dans lequel, au cours d'une cinquième étape de maintenance, un élément de raccord (42) fixé à l'élément de brûleur intact (43) est raccordé de manière réversible à l'élément de couplage (32).

13. Procédé selon la revendication 12, **caractérisé en ce qu'**une autre unité de brûleur défectueuse (41) de la fraction d'unités de brûleur défectueuses (40) comprend un élément oxydant défectueux (44), dans lequel l'élément oxydant défectueux (44) est détaché de l'élément de support (20), dans lequel un élément oxydant intact (44) est raccordé de manière réversible à l'élément de support (20).

14. Procédé pour fabriquer un module de chauffage (1) destiné à être utilisé dans un réacteur de pyrohydrolyse (2), en particulier dans un réacteur à lit fluidisé (2), dans lequel, au cours d'une première étape, un système de distribution de carburant (10) est fourni et mis en communication fluidique avec une source de carburant (2'), dans lequel, au cours d'une deuxième étape, un élément de support (20) ayant une pluralité d'unités de couplage intégrées (30) est fourni, dans lequel chaque unité de couplage (31) de la pluralité d'unités de couplage (30) est pourvue d'un élément de couplage (32), dans lequel l'élément de couplage (32) est couplé en communication fluidique avec le système de distribution de carburant (10), dans lequel, au cours d'une troisième étape, une pluralité d'unités de brûleur (40) sont disposées sur l'élément de support (20), dans lequel une unité de brûleur (41) de la pluralité d'unités de brûleur (40) est pourvue d'un élément de raccord (42) et d'un élément de brûleur (43), dans lequel l'élément de raccord (42) est mis en communication fluidique avec l'élément de brûleur (43), dans lequel l'élément de raccord (42) est raccordé de manière réversible à l'élément de couplage (32) de ladite unité de couplage (31) et dans lequel l'élément de raccord (42) est mis en communication fluidique avec l'élément de couplage (32) de ladite unité de couplage (31).

15. Procédé selon la revendication 14, **caractérisé en ce que**, au cours d'une quatrième étape, temporairement après au moins l'une, ou la totalité, de la première étape, de la deuxième étape et de la troisième étape, l'élément de support (20) est fixé de manière réversible à une chambre de réaction (3) du réacteur de pyrohydrolyse (2).
